# EUROPEAN PATENT APPLICATION

(11) **EP 2 043 085 A2**
(43) Date of publication of application: **01.04.2009**
(21) Application number: 08104909.0
(22) Date of filing: 29.07.2008
(51) Int. Cl.: G09G 5/00

(54) **Method for controlling display and display system using the same**

(30) Priority: 21.09.2007 KR 20070096988
(71) Applicant: Samsung Electronics Co., Ltd., Suwon-si, Gyeonggi-Do (KR)
(72) Inventor: Young-kook, Kim, Gyeonggi-do (KR)
(74) Representative: Van Someren, Petronella F. H. M.

(57) **Abstract**

A method for controlling a display and a display system using the same are disclosed. The method for controlling a display includes selecting one of a plurality of color space information stored at a monitor as color space information of a monitor, transmitting the selected color space information to a computer, selecting a profile corresponding to the transmitted color space information from among profiles stored at the computer, and applying the selected profile to an operating system (OS) of the computer. The method and system search a color profile according to a color space adjustment, and automatically register the searched color space to the OS. Therefore, errors occurred when the color is reproduced is minimized, and user convenience is maximized.

## Description

### BACKGROUND OF THE INVENTION

### 1. Field of the Invention

Methods and apparatuses consistent with the present invention relate to applying a profile, and more particularly, to a method for applying a selected profile to an operating system (OS) of a device, and an applying system using the same.

### 2. Description of the Related Art

A color reproduction device such as a monitor is connected to a computer to reproduce colors. The monitor employs a plurality of color spaces. If a user manipulates the computer to change the color spaces, the monitor operates according to the changed color spaces. After the color spaces are adjusted, a profile is written to correspond to the adjusted color spaces, and is stored in the computer. The process of writing a profile, that is the profiling, includes steps of measuring the ability to embody colors corresponding to the plurality of color spaces, storing the measured result as a file, and using the stored file as data in a graphic application program.

The color management employs the color reproduction profile information to select color information of an image to be output, in which the color reproduction is carried out by the color reproduction profiling using reproduction profile selected by a user, or other profiles. After the user adjusts the color spaces, the profile corresponding to the adjusted color spaces is applied to the OS.

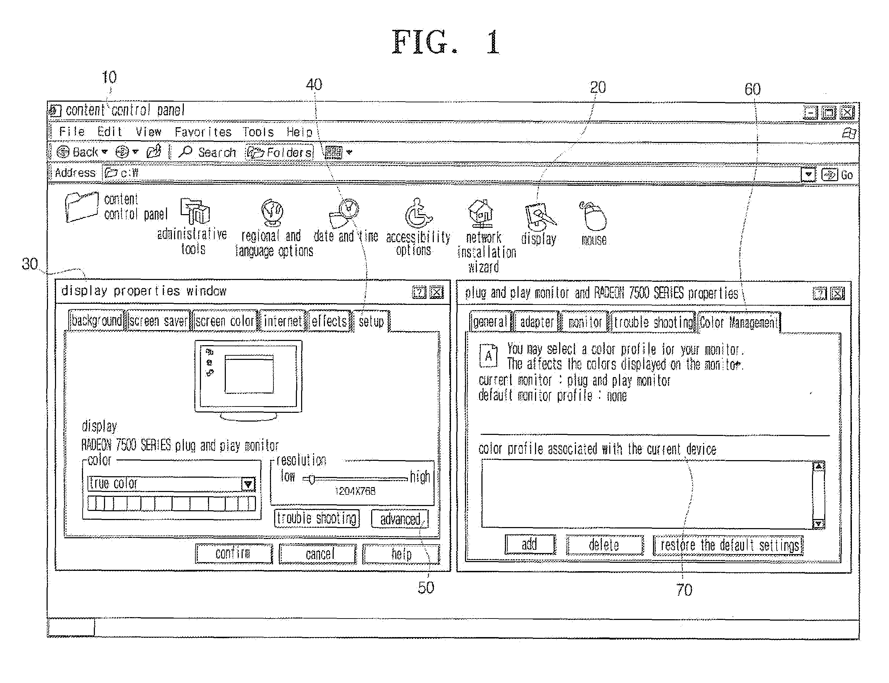

The process of applying a profile will be explained with reference to FIG. 1.

FIG. 1 is a view illustrating a related art method for applying a profile. A user enters a content control panel 10 of a window in order to apply a monitor profile. If the user selects a display icon 20, a display properties window 30 appears. The user clicks Advanced 50 of Setup 40 to display a new window. The user clicks Color Management 60, and selects a Color Profile 70.

Accordingly, the user experiences inconvenience as the user has to select items for managing colors of OS, and register the selected profile to the OS after the color spaces are adjusted.

### SUMMARY OF THE INVENTION

Exemplary embodiments of the present invention address at least the above problems and/or disadvantages and other disadvantages not described above. Also, the present invention is not required to overcome the disadvantages described above, and an exemplary embodiment of the present invention may not overcome any of the problems described above.

The present invention provides a method for applying a profile and a system which search a color profile corresponding to a condition of a monitor according to a color space adjustment, and automatically register the searched color profile to an operating system (OS) so that errors occurred when the color is reproduced is minimized, and user convenience is maximized.

According to an exemplary aspect of the present invention, there is provided a method for controlling a display system, comprising selecting one of a plurality of color space information stored at a monitor as color space information of a monitor; transmitting the selected color space information to a computer; selecting a profile corresponding to the transmitted color space information from among profiles stored at the computer; and applying the selected profile to an operating system (OS) of the computer.

The transmitting may comprise designating color space information recently selected from among the color space information as a reference value, and storing the color space information in a memory; and transmitting the color space information stored at the memory to the computer.

The selecting one color space information may comprise providing on-screen display (OSD) to change color spaces, and selecting one of the color spaces displayed on the OSD as the color space of the monitor.

The color space information comprises informations of the at least one of sRGB, ADOBE RGB, prophoto RGB, xvYCC, colormatch RGB, CMYK, Wide Gamut RGB, and APPLE RGB.

According to an exemplary aspect of the present invention, there is provided a computer, comprising an interface unit which receives selected color space information from among a plurality of pieces of color space information stored at a monitor; a profile storage unit which stores a profile corresponding to at least one piece of color space information; and a controller which applies the profile corresponding to the received color space information to an operation system (OS).

If one of the color spaces displayed on the OSD provided to the monitor is selected to change the color space, the profile storage unit stores a profile corresponding to the color space information of the selected color space.

The computer may further comprise an application program storage unit which stores a program to detect that the color space of the monitor is changed, wherein if it is detected that the color space is changed, the profile storage unit stores a profile corresponding to the change color space information.

According to an exemplary aspect of the present invention, there is provided a monitor, comprising a user command receiver which selects at least one of a plurality of color space information; and an interface unit which transmits a computer color space information selected through the user command receiver to apply a profile regarding the color space information to an operation system (OS) of the computer.

The monitor may further comprise a color space information storage unit which stores the color space information, and wherein the user command receiver is provided to select at least one of a plurality of color space information stored at the color space information storage unit.

The monitor may further comprise an on-screen display (OSD) generator which provides an OSD to change the color spaces; and wherein if one of the color spaces displayed by the OSD generator is selected, the interface unit transmits the selected color space information.

If a signal detecting the color space being changed is received, the interface unit may transmit the color space information to the computer.

According to an exemplary aspect of the present invention, there is provided a display system, comprising a monitor which transmits information regarding a color space selected by a user from among a plurality of color spaces; and a computer which selects a profile corresponding to the color space information transmitted from the monitor, and applies the selected profile to an operating system (OS).

The monitor may comprise a display unit which displays at least one of color space information; and an input unit which selects at least one of the displayed color space information.

The monitor may transmit the color space information selected by the user using a display data channel/command interface (DDC/CI) or a universal serial bus (USB) interface.

According to an exemplary aspect of the present invention, there is provided a computer-readable recording medium, recording thereon a program for transmitting to a computer color space information selected by a user among a plurality of color space information stored at a monitor; selecting a profile stored at the computer using the color space information; and applying the selected profile to an operating system (OS) of the computer.

### BRIEF DESCRIPTION OF THE DRAWINGS

The above and/or other aspects of the present invention will be more apparent by describing certain exemplary embodiments of the present invention with reference to the accompanying drawings, in which:

FIG. 1 is a view illustrating a related art method for applying a profile;

FIG. 2 is a block diagram illustrating a profile applying system according to an exemplary embodiment of the present invention;

FIG. 3 is a flowchart provided to explain a method for applying a profile according to an exemplary embodiment of the present invention; and

FIG. 4 is a view provided to explain the process of selecting a profile.

### DETAILED DESCRIPTION OF EXEMPLARY EMBODIMENTS OF THE INVENTION

Certain exemplary embodiments of the present invention will now be described in greater detail with reference to the accompanying drawings.

In the following description, same drawing reference numerals are used for the same elements even in different drawings. The matters defined in the description, such as detailed construction and elements, are provided to assist in a comprehensive understanding of the invention. Thus, it is apparent that the present invention can be carried out without those specifically defined matters. Also, well-known functions or constructions are not described in detail since they would obscure the invention with unnecessary detail.

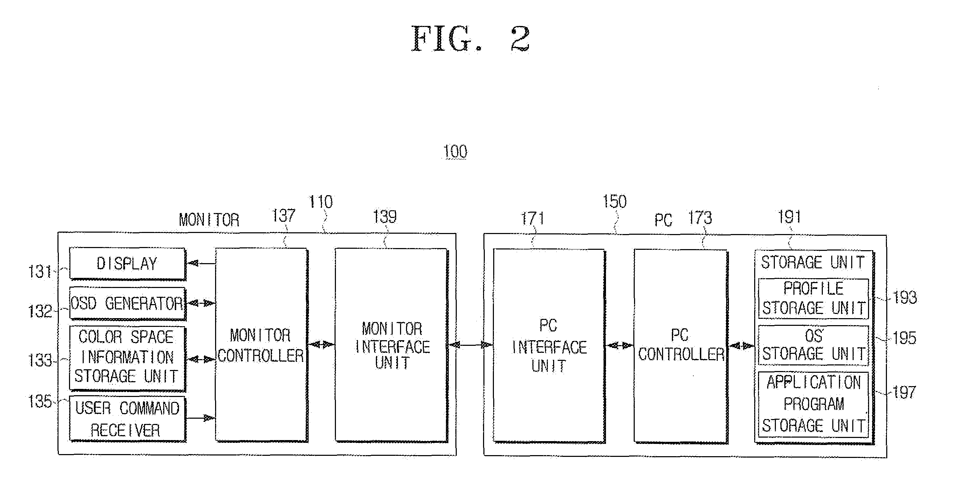

FIG. 2 is a block diagram illustrating a profile applying system 100 according to an exemplary embodiment of the present invention. The profile applying system according to the exemplary embodiment of the present invention may comprise a monitor 110 and a personal computer (PC) 150.

A monitor is explained as an example of a device for reproducing colors on a display. The monitor 110 according to the exemplary embodiment of the present invention stores information regarding color spaces. The monitor 110 employs a calibration monitor to automatically change the color spaces. The PC 150 is connected to a color reproduction device such as monitor or printer. The PC 150 employs a computer to control the color reproduction of the color reproduction device.

The color space is a way of referring to a model that represents all the possible colors that can be produced by a particular output device such as a monitor or printer, and is displayed within a color model coordinates containing red, green, and blue (RGB).

The calibration is the process of adjusting the colors of one output device to match that of another.

The monitor calibration optimizes the operational conditions of the monitor, by adjusting contrast, brightness, gamma setting, luminance, illumination, or color temperature.

The calibration monitor is capable of automatically adjusting the reproducable colors within the color spaces.

The monitor 110 may comprise a display 131, on-screen display (OSD) generator 132, a color space information storage unit 133, a user command receiver 135, a monitor controller 137, and a monitor interface unit 139.

The display 131 provides a user with an operating screen to reproduce colors.

The OSD generator 132 generates an OSD to be displayed on the display 131. The OSD generator 132 provides an OSD through which a user changes color spaces. The OSD is displayed on the display 131 so that the user selects one of the color spaces on the display 131, and operates the color reproduction.

The color space information storage unit 133 stores information of the color spaces applicable to the monitor 110. The color space information storage unit 133 may be embodied as a memory. A memory in the color information storage unit 133 stores representative values of the monitor after the color spaces are adjusted. For example, if a user adjusts the color spaces to set sRGB area, maximum brightness of 100, black level of 0.4, and a gamma of 2.2, the values representing the color spaces are stored as the representative values of the color space information at the memory in the color space information storage unit 133.

The color space information storage unit 133 stores information regarding color spaces such as sRGB, ADOBE RGB, prophoto RGB, xvYCC, colormatch RGB, CMYK, Wide Gamut RGB, or APPLE RGB.

The user command receiver 135 receives a user input to adjust color spaces of a monitor. If the user command receiver 135 receives the user input to adjust color spaces of a monitor, the OSD generator 131 generates a plurality of color space information corresponding to the user input, and displays the generated color space information on the display 131.

The user can select a desired color space using the color space information which is generated by the OSD generator 131, and which is displayed on the display 131. The user command receiver 135 transfers to the monitor controller 137 a user command which is received through a button provided at the monitor 110.

The monitor controller 137 controls the overall operations of the monitor 119 according to the user command transferred from the user command receiver 135, and according to a signal transmitted from the monitor interface unit 139.

The monitor interface unit 139 receives from the PC 150 a signal for checking whether or not the color spaces are adjusted, receives adjusted color space information from the monitor controller 137, and transmits the received information to the PC 150. The monitor interface unit 139 may employ a display data channel/command interface (DDC/CI) or a universal serial bus (USB) interface.

The PC 150 may include a PC interface unit 171, a PC controller 173, and a storage unit 191.

The PC interface unit 171 transmits to the monitor 110 a signal for checking whether or not the color spaces of the monitor 110 are adjusted. If the color spaces are adjusted, the PC interface unit 171 receives the adjusted color space information from the monitor 110.

The storage unit 191 stores various programs and information such as a profile, or OS. The storage unit 191 may be embodied as a memory or a hard disc drive (HDD). The storage unit 191 may includes a profile storage unit 193, an OS storage unit 195, and an application program storage unit 197.

The profile storage unit 193 stores profiles related to the color space adjustment. When the monitor 110 completes the color space adjustment, and the profiles corresponding to the adjusted color spaces are not pre-stored at the profile storage unit 193 of the PC 150, the PC controller 173 generates the profiles corresponding to the adjusted color spaces, and stores the generated profiles at the profile storage unit 193.

If the color spaces of the monitor 110 are adjusted, the profile storage unit 193 selects profiles corresponding to the adjusted color spaces, and transmits the profiles to the PC controller 173 in order that the selected profiles are applied to the OS.

The OS storage unit 195 stores an OS of the PC 150.

The application program storage unit 197 stores various application programs such as an interface program between the monitor 110 and the PC 150. The application program storage unit 197 may be embodied as a memory or a hard disc drive (HDD).

The interface program between the monitor 110 and the PC 150 is an application program stored in the application program storage unit 197, in which the monitor controller 137 detects the color space being changed, and the profile storage unit 193 stores the profiles corresponding to the changed color space information.

The interface program stored in the application program storage unit 197 is programmed, so that if it is detected that the monitor color space is adjusted, and that the color space is adjusted, the color space information of the monitor 110 is extracted through the PC interface unit 171, and the profile of the extracted color space information is applied to the OS of the PC 150.

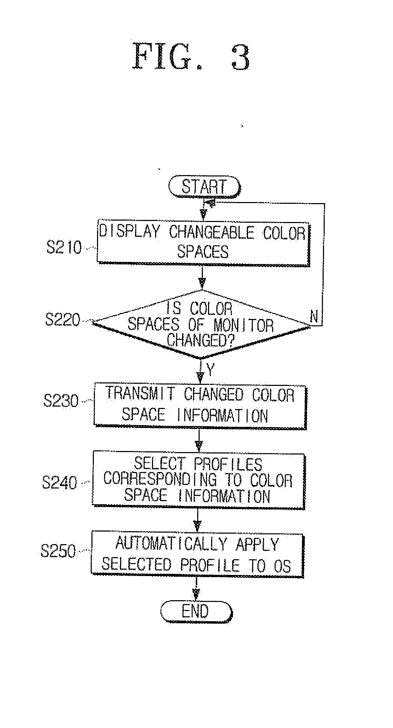

FIG. 3 is a flowchart provided to explain a method for applying a profile according to an exemplary embodiment of the present invention.

A command to display color spaces is input through the user command receiver 135, and the display 131 displays the changeable color spaces stored at the color space information storage unit 133 (S210).

The interface program stored in the application program storage unit 197 detects whether the color spaces of the monitor 110 is changed through the signal transmission between the PC interface unit 171 and the monitor interface unit 139 (S220).

If it is determined that the color spaces of the monitor 110 is changed (S220-Y), the PC controller 173 transmits a control signal to the monitor 110 in response to receive the color space information, and the monitor controller 137 transmits the changed color space information to the PC 150 (S230).

If the PC 150 receives the changed color space information, the PC controller 173 selects the profiles corresponding to the received color space information from the profiles stored at the profile storage unit 193 (S240).

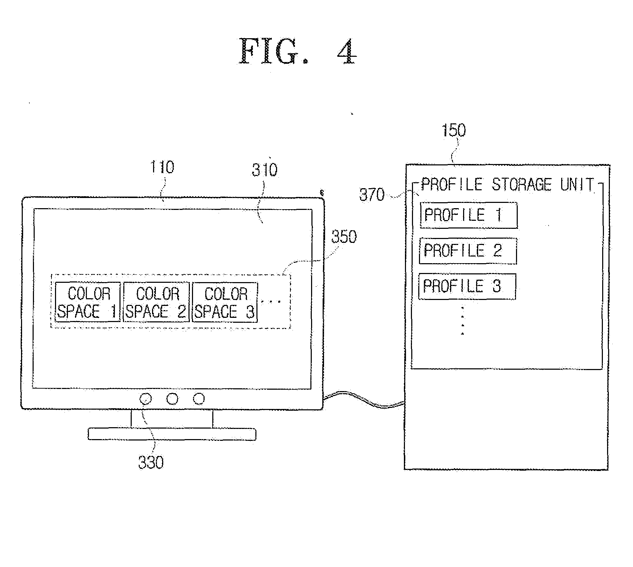

The processes of displaying color spaces on the display 131 and selecting the profiles corresponding to the selected color space information will be explained with reference to FIG. 4.

FIG. 4 is a view provided to explain the process of selecting a profile.

If a user presses a color space information button 330, a list 350 regarding a plurality of color spaces is displayed on a screen 310 of the monitor 110 as an on-screen display (OSD).

The user selects a desired color space by repetitively pressing the color space information button 330 or by pressing other buttons.

If the user selects a color space, the profile corresponding to the color space selected by the user is selected from among profiles 370 pre-stored at the PC 150.

Referring to FIG. 4, the PC controller 173 automatically applies the selected profile to the OS (S250). If the color space is changed by the manipulation of the monitor 110, the profile of the changed color space stored at the PC 150 is automatically registered at the OS.

The exemplary embodiment of the present invention employs the interface program in the PC in which if the color space is changed, the profile corresponding to the changed color space is registered at the OS. However, it is merely an exemplary embodiment of the present invention. Alternatively, it may be embodied that the interface program checks values in a memory of the monitor in a predetermined cycle to detect the change of the color spaces.

As described above, according to the present invention of the present invention, the color profile is detected according to the color space adjustment, and the detected profile is automatically registered at the OS. Therefore, errors occurred when the color is reproduced is minimized, and user convenience is maximized.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. A method for controlling a display system, comprising:
selecting one of a plurality of color space information stored at a monitor as selected color space information of the monitor;
transmitting the selected color space information to a computer;
selecting a profile corresponding to the transmitted color space information from among profiles stored at the computer; and
applying the selected profile to an operating system (OS) of the computer.

2. The method of claim 1, wherein the transmitting comprises:
designating the selected color space information as a reference value, and storing the selected color space information in a memory; and
transmitting the selected color space information stored at the memory to the computer.

3. The method of any one of claims 1 and 2, wherein the selecting one of the plurality of color space information comprises:
providing an on-screen display (OSD), and selecting one of a plurality of color spaces displayed on the OSD as the selected color space information of the monitor.

4. The method of any one of claims 1 to 3, wherein each of the pluratliy of the color space information comprises information in at least one of sRGB, ADOBE RGB, prophoto RGB, xvYCC, colormatch RGB, CMYK, Wide Gamut RGB, and APPLE RGB.

5. A computer-readable recording medium, recording thereon a program for
excuting the method of claim 1
transmitting to a computer, color space information selected by a user among a plurality of color space information stored at a monitor;
selecting a profile stored at the computer using the selected color space information; and
applying the selected profile to an operating system (OS) of the computer.

6. A display system, comprising:
a monitor which transmits color space information regarding a color space selected by a user from among a plurality of color spaces, as transmitted color space information; and
a computer which selects a profile corresponding to the transmitted color space information transmitted from the monitor, and applies the selected profile to an operating system (OS).

7. The display system of claim 6, wherein the monitor comprises:
a display unit which displays at least one of a plurality of color space information; and
an input unit which selects at least one of the displayed at least one of the plurality of color space information.

8. The display system of any one of claims 6 and 7, wherein the monitor transmits the color space information using a display data channel/command interface (DDC/CI) or a universal serial bus (USB) interface.

9. The display system of any one of claims 6 to 8, wherein the computer, comprising:
an interface unit which receives selected color space information from among a plurality of color space information stored at a monitor;
a profile storage unit which stores a profile corresponding to at least the received color space information; and
a controller which applies the profile corresponding to the received color space information to an operation system (OS).

10. The display system of any one of claims 6 to 9, wherein if one of the plurality of color space information displayed on an on-screen display (OSD) provided to the monitor is selected to change a color space, the profile storage unit stores a profile corresponding to the selected color space information.

11. The display system of any one of claims 6 to 10, the computer further comprising:
an application program storage unit which stores a program to detect that a color space of the monitor is changed,
wherein if it is detected that the color space of the monitor is changed, the profile storage unit stores a profile corresponding to color space information of the changed color space.

12. The display system of any one of claims 6 to 11, wherein the monitor, comprising:
a user command receiver which selects at least one of a plurality of color space information as selected color space information; and
an interface unit which transmits to a computer the selected color space information to apply a profile corresponding to the selected color space information to an operation system (OS) of the computer.

13. The display system of any one of claims 6 to 12, , the moniter further comprising:
a color space information storage unit which stores the selected color space information,
and wherein the user command receiver is provided to select at least one of the plurality of color space information stored at the color space information storage unit.

14. The display system of any one of claims 6 to 13,the moniter further comprising:
an on-screen display (OSD) generator which provides an OSD to change color spaces;
and wherein if one of color spaces displayed by the OSD generator is selected, the interface unit transmits color space information corresponding to the selected color space.

15. The display system of any one of claims 6 to 14, , wherein if a signal indicating the color space being changed, is received from the computer, the interface unit transmits the selected color space information corresponding to the color space to the computer.
